# FASCICULE DE BREVET EUROPEEN

(11) **EP 2 658 901 B1**
(45) Date de publication et mention de la délivrance du brevet: **19.09.2018**
(21) Numéro de dépôt: 11815541.5
(22) Date de dépôt: 23.12.2011
(51) Int. Cl.: C08J 5/18, E04D 12/00

(54) **COMPOSITIONS A BASE DE COPOLYETHER BLOC AMIDES, DE COPOLYETHER BLOC ESTERS, DE POLYOLEFINES FONCTIONNALISEES ET D'AMIDON POUR DES APPLICATIONS DE FILM IMPER RESPIRANTS**
ZUSAMMENSETZUNGEN MIT COPOLYETHERBLOCKAMIDEN, COPOLYETHERBLOCKESTERN, FUNKTIONALISIERTEN POLYOLEFINEN UND STÄRKE ZUR VERWENDUNG FÜR WASSERDICHTE ATMUNGSAKTIVE FOLIEN
COMPOSITIONS CONTAINING COPOLYETHER BLOCK AMIDES, COPOLYETHER BLOCK ESTERS, FUNCTIONALIZED POLYOLEFINS AND STARCH FOR USES FOR WATERPROOF BREATHABLE FILM

(30) Priorité: 27.12.2010 FR 1061269
(43) Date de publication de la demande: 06.11.2013
(73) Titulaire: Arkema France, 92700 Colombes (FR)
(72) Inventeur: BABIN, Perrine, 92150 Suresnes (FR); LE, Guillaume, F-14460 Colombelles (FR); BRULE, Benoît, F-27170 Beaumont Le Roger (FR)
(74) Mandataire: Hérard, Elise
(86) Numéro de dépôt international: PCT/FR2011/053187
(87) Numéro de publication internationale: WO 2012/089977

(56) Documents cités:
- EP-A1- 1 192 886
- EP-A2- 0 408 501
- FR-A1- 2 765 230
- US-A- 5 635 550
- US-A1- 2008 182 113

## Description

### DOMAINE TECHNIQUE

Le domaine technique auquel se rapporte l'invention est celui des films imper respirants utilisés notamment comme matériaux d'isolation sous la toiture des habitations et pour l'isolation des murs.

### ETAT DE LA TECHNIQUE

Un film de sous-toiture ou « film sous-toiture » est un film souple disposé entre la charpente et le matériau de couverture d'une habitation. Son rôle est d'une part d'empêcher que des éléments extérieurs tels que les poussières, les pollens, le sable, la pluie et la neige ne s'infiltrent sous la toiture et d'autre part d'éviter que l'humidité produite par l'activité humaine ne s'accumule dans l'habitation. Ce film permet l'évacuation de la vapeur d'eau hors du bâti. Un tel film peut être imper respirant, c'est-à-dire être à la fois perméable à la vapeur d'eau et imperméable à l'eau. L'utilisation d'un film sous-toiture imper respirant permet d'avoir une habitation qui respire et qui est donc saine pour ses occupants.

Les documents suivants décrivent différentes compositions pour des films imper respirants pouvant être utilisés sous la toiture d'un bâtiment.

Le document FR-A-2 639 644 décrit un film élastomère thermoplastique perméable à la vapeur d'eau à base de polyétheresteramide, et de préférence de copolyéther bloc amide, tel que ceux de la famille PEBAX® commercialisés par ARKEMA. Ces polymères se caractérisent par une très forte perméabilité à la vapeur d'eau.

Le document EP-A-0 688 826 décrit un mélange comprenant :
a) au moins un élastomère thermoplastique ayant des blocs polyéther, tels qu'un copolyéther bloc amide;
b) au moins un copolymère comprenant de l'éthylène et au moins un (méth)acrylate d'alkyle.

Le document WO 02/12376 décrit un mélange:
a) d'au moins un polymère (a) pris dans le groupe comprenant un copolymère (a1) éthylène / (méth)acrylate d'alkyle, un copolymère (a2) éthylène/acide (méth)acrylique éventuellement neutralisé, un copolymère éthylène/monomère vinylique (a3), le mélange (a1) et (a2), le mélange (a1) et (a3), le mélange (a2) et (a3) et le mélange (a1), (a2) et (a3) ; et/ou
b) d'au moins un polyéthylène fonctionnalisé (b) ; et
c) d'au moins un copolymère (c) ayant des blocs copolyamide ou des blocs polyester et des blocs polyéther.

Certains films fabriqués à partir de copolyéther bloc esters, tels que ceux de la gamme Hytrel® commercialisée par DuPont de Nemours, présentent aussi des propriétés imper respirantes et peuvent donc être utilisés comme films sous toiture.

La réglementation en matière de construction d'habitations impose que les matériaux d'isolation utilisés sous la toiture et sur les murs extérieurs d'une habitation présentent une perméabilité minimum à la vapeur d'eau. La perméabilité à la vapeur d'eau est évaluée à l'aide du paramètre MVTR (Moisture Vapor Transmission Rate). En particulier, il est souhaitable qu'un film imper-respirant utilisé comme film d'isolation murale (« house wrapping ») présente une valeur de MVTR mesurée par la méthode A, d'au moins 70 g/m² pendant 24 heures à 23°C pour un taux d'humidité relative de 50% et une épaisseur de film de 25 µm. Il est aussi souhaitable que la perméabilité minimum soit d'au moins 350 g/m² dans les mêmes conditions de mesure lorsque le film est utilisé sous la toiture (« roofing »).

Cette exigence plus élevée pour le film sous-toiture s'explique par le fait que l'air chaud monte vers le toit par convection et que la température y est donc plus élevée, d'où une quantité de vapeur d'eau plus importante en hauteur à évacuer.

Les films sous-toiture connus sont fabriqués à partir de polymères synthétiques. Or, les polymères synthétiques sont fabriqués à partir de matières premières non-renouvelables. On cherche à limiter leur quantité dans la fabrication d'un film imper respirant. On recherche donc un film obtenu au moins partiellement à partir de matières premières naturelles (ou bio-ressourcées) et qui présente une perméabilité au moins aussi bonne que celle d'un film obtenu à partir de polymères synthétiques. En particulier, on cherche un film obtenu au moins partiellement à partir de matières premières naturelles, qui satisfasse aux exigences de perméabilité indiquées ci-dessus. On recherche également un film imper respirant présentant une forte perméabilité à la vapeur d'eau ainsi qu'une bonne durée de vie afin de garantir la pérennité de l'ensemble de la toiture. Autrement dit, on cherche un film imper respirant qui ne soit pas facilement dégradé par une exposition prolongée à l'humidité.

Enfin, les films de l'art antérieur décrits ci-dessus sont obtenus par mise en forme du mélange comprenant les différents polymères. La mise en forme peut s'effectuer selon tout procédé d'extrusion connu, tel que l'extrusion calandrage à plat, l'extrusion plaxage, l'extrusion soufflage. En général, la température d'extrusion est d'au moins 200°C, ce qui nécessite une forte puissance de chauffage. On recherche donc un film imper respirant qui puisse être fabriqué à une température de chauffage ou d'extrusion inférieure à 200°C, de préférence inférieure à 190°C, de préférence inférieure à 180°C.

### RESUME DE L'INVENTION

A cet effet, l'invention propose un film imper respirant comprenant :
a) un copolyéther bloc amide dans lequel le bloc polyéther dérive du polyéthylène glycol (PEG), éventuellement un copolyéther bloc ester, et optionnellement une polyoléfine fonctionnalisée;
b) de l'amidon,
   dans lequel le pourcentage d'amidon représente de 10% à 80% du poids de la compositions.

Selon un mode de réalisation, le pourcentage d'amidon représente de préférence de 30 à 80%, de préférence encore de 40 à 70 % du poids de la composition.

Selon un mode de réalisation, le copolyéther bloc amide comprend de 1 à 80 % en masse de blocs polyéther et de 20 à 99 % en masse de blocs polyamide, de préférence de 4 à 80 % en masse de blocs polyéther et 20 à 96 % en masse de blocs polyamide, de préférence encore de 30 à 60% en masse de blocs polyéther et de 40 à 70% en masse de blocs polyamide.

Selon un mode de réalisation, le bloc polyamide est choisi dans le groupe comprenant les blocs 6, 11, 12, 6.6, 6.10 ou 6.12.

Selon un mode de réalisation, le copolyéther bloc amide comprend au moins un bloc PA 12 et au moins un bloc PEG.

Selon un mode de réalisation, la polyoléfine fonctionnalisée comprend un greffage par un monomère choisi dans le groupe comprenant les acides carboxyliques insaturés, les anhydrides carboxyliques insaturés, les monomères vinyliques, les monomères acryliques, ou un mélange de ceux-ci.

Selon un mode de réalisation, la polyoléfine fonctionnalisée est un copolymère d'éthylène avec de l'acrylate de méthyle.

Selon un mode de réalisation, la polyoléfine fonctionnalisée est choisie dans le groupe comprenant les copolymères éthylène-ester acrylique, les copolymères éthylène-ester acrylique-anhydride maléique, les copolymères éthylène-ester acrylique-méthacrylate de glycidyle.

Selon un mode de réalisation, le film a une épaisseur comprise entre 25 et 500 µm, de préférence entre 50 et 400 µm.

Ce film peut être utilisé comme isolant sous la toiture d'un bâtiment ou pour isoler les murs du bâtiment. Un tel film présente à la fois une bonne durabilité ainsi qu'une meilleure perméabilité à la vapeur d'eau. Le film conserve au cours du temps sa propriété de barrière contre les éléments extérieurs qui pourraient s'infiltrer dans l'habitation. L'amélioration de la perméabilité du film à la vapeur d'eau favorise la ventilation dans l'habitation.

La présente invention a également pour objet l'utilisation de ce film dans l'équipement médical et les textiles, tels que des draps, des blouses chirurgicales, des tissus, des tapis, des matelas, des pansements, des vêtements, notamment des vêtements de protection ; dans l'agriculture, tels que les films agricoles ; dans l'emballage, le packaging ; l'équipement militaire, l'équipement maritime, notamment les couvertures marines ; le transport, l'aéronautique, l'automobile ; l'équipement d'extérieur ; le sport ; les loisirs ; l'informatique, l'électronique, l'ameublement ; la décoration ; l'équipement pour bébé ou pour enfant ; ou dans tout autre domaine nécessitant à la fois des propriétés d'isolation et de ventilation.

L'invention a également pour objet un procédé de fabrication du film selon l'invention, comprenant les étapes de :
a) mise à disposition d'un polymère choisi parmi un copolyéther bloc amide lequel le bloc polyéther dérive du polyéthylène glycol (PEG), éventuellement d'un copolyéther bloc ester et optionnellement d'une polyoléfine fonctionnalisées;
b) mise à disposition d'amidon ;
c) mélange et chauffage du ou des polymère(s) de l'étape a) et de l'amidon à une température supérieure à la température de fusion du ou des polymère(s) de l'étape a) et à la température de fusion de l'amidon ;
d) étirement du mélange pour former un film.

Selon un mode de réalisation, l'étape d'étirement du mélange est effectuée par extrusion soufflage.

Selon un mode de réalisation, l'étape d'étirement du mélange est effectuée par extrusion à plat.
Selon un mode de réalisation, le chauffage de l'étape c) est effectué à une température inférieure à 200°C, de préférence inférieure à 190°C, de préférence encore inférieure à 180°C.

### BREVE DESCRIPTION DE LA FIGURE

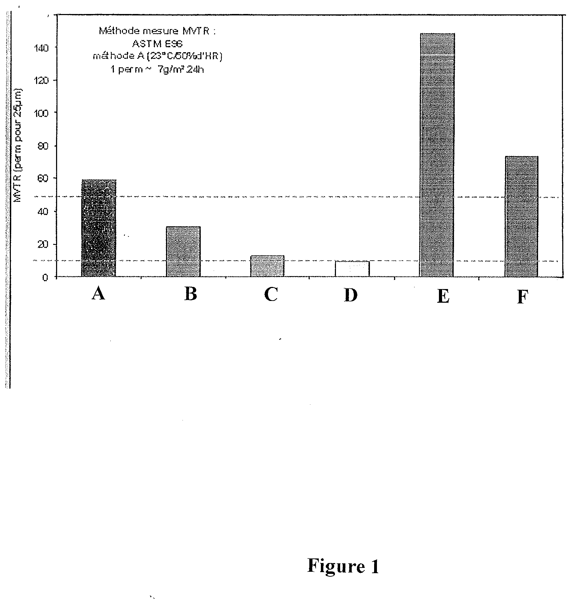

La Figure 1 représente la valeur de la perméabilité mesurée sur des films de différentes compositions. Les exemples A-D sont comparatifs. Les exemples E et F sont selon l'invention.

### EXPOSE DETAILLE DES MODES DE REALISATION DE L'INVENTION

L'invention est maintenant décrite plus en détail et de façon non limitative dans la description qui suit.

Les polymères utilisés dans le film selon l'invention peuvent être choisis parmi les copolyéther bloc amides dans lesquels le bloc polyéther dérive du polyéthylène glycol (PEG), éventuellement en mélange avec un (ou plusieurs) copolyéther bloc ester.

Les polymères utilisés dans le film selon l'invention peuvent comprendre en outre de manière optionnelle une (ou plusieurs) polyoléfine(s) fonctionnalisée(s),

Les copolyéther bloc amides abrégés « PEBA », aussi nommés copolymères à blocs polyéther et blocs polyamide, résultent de la polycondensation de blocs polyamides à extrémités réactives avec des blocs polyéthers à extrémités réactives, telles que, entre autres :
1) blocs polyamides à bouts de chaîne diamines avec des blocs polyoxyalkylènes à bouts de chaînes dicarboxyliques ;
2) blocs polyamides à bouts de chaînes dicarboxyliques avec des blocs polyoxyalkylènes à bouts de chaînes diamines, obtenues par cyanoéthylation et hydrogénation de blocs polyoxyalkylène alpha-oméga dihydroxylées aliphatiques appelées polyétherdiols ;
3) blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne. Les blocs polyamides à bouts de chaînes diamines proviennent par exemple de la condensation de précurseurs de polyamides en présence d'une diamine limiteur de chaîne.

La masse molaire en nombre Mn des blocs polyamides est comprise entre 400 et 20000 g/mole et de préférence entre 500 et 10000 g/mole.

Les polymères à blocs polyamides et blocs polyéthers peuvent aussi comprendre des motifs répartis de façon aléatoire.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone et d'une diamine aliphatique ou aromatique, en particulier celles ayant de 2 à 20 atomes de carbone, de préférence celles ayant de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et para-amino-di-cyclo-hexyl-méthane (PACM), et l'isophoronediamine (IPDA), la 2,6-bis-(aminométhyl)-norbornane (BAMN) et la pipérazine (Pip).

Avantageusement, on a des blocs PA4.12, PA4.14, PA4.18, PA6.10, PA6.12, PA6.14, PA6.18, PA9.12, PA10.10, PA10.12, PA10.14 et PA10.18, le premier chiffre indiquant le nombre d'atomes de carbone de la diamine et le second chiffre, le nombre d'atomes de carbone de l'acide carboxylique.

Selon un deuxième type, les blocs polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide alpha omega amino carboxylique, on peut citer les acides aminocaproïque, amino-7-heptanoïque, amino-11-undécanoïque et amino-12-dodécanoïque.

Avantageusement les blocs polyamides du deuxième type sont en polyamide 11, en polyamide 12 ou en polyamide 6.

Selon un troisième type, les blocs polyamides résultent de la condensation d'au moins un acide alpha oméga aminocarboxylique (ou un lactame), au moins une diamine et au moins un diacide carboxylique.

Dans ce cas, on prépare, les blocs polyamide PA par polycondensation :
- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),
- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques ;

Avantageusement, on utilise comme limiteur de chaîne le diacide carboxylique ayant Y atomes de carbone, que l'on introduit en excès par rapport à la stoechiométrie de la ou des diamines.

Selon une variante de ce troisième type, les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne. A titre d'exemple d'acide alpha omega amino carboxylique aliphatique, on peut citer les acides aminocaproïques, amino-7-heptanoïque, amino-11-undécanoïque et amino-12-dodécanoïque. A titre d'exemple de lactame, on peut citer le caprolactame, l'oenantholactame et le lauryllactame. A titre d'exemple de diamines aliphatiques, on peut citer l'hexaméthylènediamine, la dodécaméthylènediamine et la triméthylhexaméthylène diamine. A titre d'exemple de diacides cycloaliphatiques, on peut citer l'acide 1,4-cyclohexyldicarboxylique. A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque PRIPOL® par la société UNICHEMA, ou sous la marque EMPOL® par la société HENKEL) et les Polyoxyalkylènes - alpha, omega diacides. A titre d'exemple de diacides aromatiques, on peut citer les acides téréphtalique (T) et isophtalique (I). A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

A titre d'exemples de blocs polyamides du troisième type, on peut citer les suivantes :
- 6.6/6 dans laquelle 6.6 désigne des motifs hexaméthylènediamine condensés avec l'acide adipique. 6 désigne des motifs résultant de la condensation du caprolactame.
- 6.6/6.10/11/12 dans laquelle 6.6 désigne l'hexaméthylènediamine condensée avec l'acide adipique. 6.10 désigne l'hexaméthylènediamine condensée avec l'acide sébacique. 11 désigne des motifs résultant de la condensation de l'acide aminoundécanoïque. 12 désigne des motifs résultant de la condensation du lauryllactame.

De préférence, le polymère comprend de 1 à 80 % en masse de blocs polyéther et de 20 à 99 % en masse de blocs polyamide, de préférence de 4 à 80 % en masse de blocs polyéther et 20 à 96 % en masse de blocs polyamide, de préférence encore de 30 à 60% en masse de blocs polyéther et de 40 à 70% en masse de blocs polyamide. La masse Mn des blocs polyéther est comprise entre 100 et 6 000 g/mole et de préférence entre 200 et 3 000 g/mole.

Les blocs polyéthers sont constitués de motifs oxyde d'alkylène. Ces motifs peuvent être par exemple des motifs oxyde d'éthylène, des motifs oxyde de propylène ou tétrahydrofurane (qui conduit aux enchaînements polytétraméthylène glycol). On utilise selon l'invention des blocs PEG (polyéthylène glycol), c'est-à-dire ceux constitués de motifs oxyde d'éthylène. De manière additionnelle, on utilise éventuellement un ou plusieurs blocs choisis parmi des blocs PPG (propylène glycol), c'est-à-dire ceux constitués de motifs oxyde de propylène, des blocs PO3G (polytriméthylène glycol), c'est-à-dire ceux constitués de motifs polytriméthylène ether de glycol (de tels copolymères avec des blocs polytriméthylene ether sont décrits dans le document US 6590065), et des blocs PTMG c'est-à-dire ceux constitués de motifs tétraméthylène glycols appelés aussi polytétrahydrofurane. Les copolymères PEBA peuvent comprendre dans leur chaîne plusieurs types de polyéthers, les copolyéthers pouvant être à blocs ou statistiques. La perméabilité à la vapeur d'eau du copolymère PEBA augmente avec la quantité de blocs polyéther et varie en fonction de la nature de ces blocs. On utilise selon l'invention un bloc polyéther de polyéthylène glycol qui permet d'obtenir un PEBA présentant une bonne perméabilité.

Les blocs polyéthers peuvent aussi comprendre des amines primaires éthoxylées. A titre d'exemple d'amines primaires éthoxylées on peut citer les produits de formule : 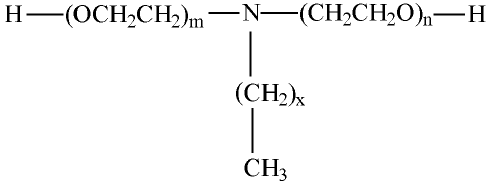 dans laquelle m et n sont compris entre 1 et 20 et x entre 8 et 18. Ces produits sont disponibles dans le commerce sous la marque Noramox® de la société CECA et sous la marque Genamin® de la société Clariant.

Les blocs souples polyéthers peuvent comprendre des blocs polyoxyalkylène à bouts de chaînes NH₂, de tels blocs pouvant être obtenus par cyanoacétylation de blocs polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman, également décrites dans les documents de brevets JP2004346274, JP2004352794 et EP1482011).

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. La méthode générale de préparation en deux étapes des copolymères PEBA ayant des liaisons ester entre les blocs PA et les blocs PE est connue et est décrite, par exemple, dans le brevet français FR2846332. La méthode générale de préparation des copolymères PEBA de l'invention ayant des liaisons amide entre les blocs PA et les blocs PE est connue et décrite, par exemple dans le brevet européen EP1482011. Les blocs polyéther peuvent être aussi mélangés avec des précurseurs de polyamide et un limiteur de chaîne diacide pour faire les polymères à blocs polyamides et blocs polyéthers ayant des motifs répartis de façon statistique (procédé en une étape).

Bien entendu, la désignation PEBA dans la présente description de l'invention se rapporte aussi bien aux PEBAX® commercialisés par Arkema, aux Vestamid® commercialisés par Evonik®, aux Grilamid® commercialisés par EMS, qu'aux Kellaflex® commercialisés par DSM ou à tout autre PEBA d'autres fournisseurs.

Avantageusement, les copolymères PEBA ont des blocs PA en PA 6, en PA 11, en PA 12, PA 6.12, en PA 6.6/6, en PA 10.10 et/ou en PA 6.14, de préférence des blocs PA 11 et/ou PA 12; et des blocs PE constitués majoritairement de PEG qui sont à ranger dans la gamme des PEBA hydrophiles. Les PEBA à base de blocs PE constitués majoritairement de PTMG sont à ranger dans la gamme des PEBA hydrophobes.

Avantageusement, ledit PEBA utilisé dans la composition selon l'invention est obtenu au moins partiellement à partir de matières premières bio-ressourcées. Par matières premières d'origine renouvelable ou matières premières bio-ressourcées, on entend des matériaux qui comprennent du carbone bio-ressourcé ou carbone d'origine renouvelable. En effet, à la différence des matériaux issus de matières fossiles, les matériaux composés de matières premières renouvelables contiennent du ¹⁴C. La « teneur en carbone d'origine renouvelable » ou « teneur en carbone bio-ressourcé » est déterminée en application des normes ASTM D 6866 (ASTM D 6866-06) et ASTM D 7026 (ASTM D 7026-04). A titre d'exemple, les PEBA à base de polyamide 11 proviennent au moins en partie de matières premières bio-ressourcées et présentent une teneur en carbone bio-ressourcé d'au moins 1%, ce qui correspond à un ratio isotopique de ¹²C/¹⁴C d'au moins 1,2 x 10⁻¹⁴. De préférence, les PEBA selon l'invention comprennent au moins 50% en masse de carbone bio-ressourcé sur la masse totale de carbone, ce qui correspond à un ratio isotopique ¹²C/¹⁴C d'au moins 0,6x10⁻¹². Cette teneur est avantageusement plus élevée, notamment jusqu'à 100%, qui correspond à un ratio isotopique ¹²C/¹⁴C de 1,2 x 10⁻¹², dans le cas de PEBA à blocs PA 11 et blocs PE issus de matières premières d'origine renouvelable.

On peut également utiliser un copolyéther bloc ester comprenant un bloc de poly(oxyalkylène) et un bloc polyester.

Le bloc polyester peut être obtenu par polycondensation par estérification d'un acide carboxylique, tel que l'acide isophtalique ou l'acide téréphtalique ou un acide carboxylique bio-sourcé (tel que l'acide furane dicarboxylique), avec un glycol, tel que l'éthylène glycol, le triméthylène glycol, le propylène glycol ou le tétraméthylène glycol.

Le bloc polyéther peut être tel que décrit ci-dessus en relation avec les PEBA. Les polymères de la gamme Hytrel® commercialisée par DuPont de Nemours ou ceux de la gamme Arnitel® commercialisée par DSM sont des exemples de copolyéther bloc esters.

La polyoléfine fonctionnalisée est un polymère aliphatique saturé, synthétique, issu de la polymérisation d'une oléfine, telle que l'éthylène et ses dérivés, sur la chaîne principale duquel ont été greffés des monomères choisis par exemple parmi les acides carboxyliques insaturés, les anhydrides carboxyliques insaturés, les monomères vinyliques, les monomères acryliques.

On peut citer comme exemples d'acide carboxylique insaturé, l'acide (méth)acrylique, l'acide crotonique, l'acide cinnamique.

On peut citer comme exemples d'anhydride carboxylique insaturé, l'anhydride citraconique, l'anhydride itaconique, l'anhydride tétrahydrophalique, l'anhydride méthyl-2 maléique, l'anhydride diméthyl-2,3 maléique et l'anhydride maléique.

On peut citer comme exemples de monomère acryliques, l'acrylonitrile, les esters acryliques tels que le (meth)acrylate de méthyle, le (meth)acrylate de n-butyle, le (meth)acrylate d'isobutyle, le (meth)acrylate d'éthyl-2 hexyle, le (meth)acrylate de glycidyle.

Une polyoléfine fonctionnalisée par de l'acrylate de méthyle et du methacrylate de glycidyle est commercialisée par ARKEMA sous la dénomination Lotader GMA®. Une polyoléfine fonctionnalisée par de l'acrylate de méthyle, de l'acrylate de butyle et de l'acrylate de 2-ethyl hexyl est commercialisée par ARKEMA sous la dénomination Lotryl®. Une polyoléfine fonctionnalisée par du (meth)acrylate de méthyle, du (meth)acrylate d'éthyle, du (meth)acrylate de butyle et de l'anhydride maléique est commercialisée par ARKEMA sous la dénomination Lotader MAH®.

Il a été découvert d'une part que l'association d'un copolyéther bloc amide et/ou d'un copolyéther bloc ester et/ou d'une polyoléfine fonctionnalisée avec de l'amidon permet d'améliorer la perméabilité du film par rapport à un film comprenant les polymères seuls et d'autre part que, de manière surprenante, un film selon l'invention présente une bonne résistance à la dégradation provoquée par l'humidité. Ce résultat est surprenant car il est connu que l'amidon se dégrade et se décompose rapidement lorsqu'il est exposé à l'humidité, comme indiqué dans les documents US 5095054, US 2008/0038496 et US 2007/0228046. Dans les deux derniers documents, l'amidon est utilisé dans la fabrication de sacs biodégradables destinés au stockage temporaire de déchets organiques. Sans vouloir être lié par la théorie, la Demanderesse estime que les polymères utilisés dans l'invention protègent l'amidon contre une dégradation due à l'humidité tout en permettant à l'amidon d'augmenter la perméabilité du film à la vapeur d'eau.

Tout type d'amidon peut être utilisé dans l'invention. Ce peut être de l'amidon de maïs, de pomme de terre, de blé, de tapioca, de pois. L'amidon peut être modifié par greffage de groupements chimiques. Il peut être employé dans les différentes formes suivantes :
- l'amidon natif (non modifié): les grains d'amidon sont le siège de l'organisation semi-cristalline des deux polymères constitutifs que sont l'amylose et l'amylopectine. Le degré de polymérisation et la proportion d'amylose varient selon l'origine botanique de l'amidon.
- l'amidon gélatinisé : lors d'un chauffage voisin de 80°C en milieu aqueux, l'amidon s'hydrate et gonfle. Une partie de l'amylose, puis de l'amylopectine passe en solution (empesage). La suspension devient alors visqueuse, l'amidon devient plus facilement hydrolysable.
- l'amidon gélifié - l'amidon rétrogradé : lorsque la température de la solution aqueuse diminue, le système se gélifie puis se réorganise en une structure semi-cristalline (rétrogradation). Ces molécules réorganisées sont formées d'amylose, d'amylopectine et de cristaux mixtes amylose-amylopectine.
- l'amidon destructuré, forme dans laquelle les polymères d'amylose et d'amylopectine sont dispersés.

En plus de l'utilisation d'amidon qui est une matière naturelle, l'utilisation de polymères PEBA préparés à partir de blocs polyamide et/ou polyéther au moins partiellement bio-ressourcés permet d'augmenter davantage la quantité de matières naturelles dans le film selon l'invention.

Pour fabriquer la composition selon l'invention, on peut préparer un mélange du ou des polymère(s) avec de l'amidon puis faire fondre le mélange par chauffage à une température supérieure à la température de fusion du ou des polymère(s) et à la température de fusion de l'amidon. Puis, on étire le mélange pour former un film. Le chauffage du ou des polymères peut être effectué séparément de l'étape de chauffage de l'amidon, le ou les polymères fondus et l'amidon étant ensuite mélangés.

De manière avantageuse, on extrude le mélange du ou des polymère(s) avec l'amidon en présence d'eau. Ceci permet d'abaisser le point de fusion du mélange et ainsi de pouvoir transformer le mélange à plus basse température. On obtient donc un gain d'énergie et on limite le risque de dégradation du ou des polymère(s) et de l'amidon. De préférence, la température de chauffage ou d'extrusion est inférieure à 200°C, de préférence inférieure à 190°C, de préférence encore inférieure à 180°C.

Le film peut par exemple être obtenu par extrusion soufflage (blow extrusion) ou par extrusion à plat (cast extrusion). La température d'extrusion varie en fonction du polymère utilisé et du procédé de formation du film. Le film obtenu se présente sous la forme d'une dispersion de particules d'amidon dans une matrice polymérique.

### EXEMPLES

Des films imper respirants ont été préparés à partir de mélanges comprenant diverses proportions d'un copolyéther bloc amide PEBA, d'une polyoléfine fonctionnalisée et d'amidon thermoplastique.

Le copolyéther bloc amide utilisé dans les exemples ci-dessous appartient à la gamme des PEBA hydrophiles commercialisés par Arkema, et en particulier ceux dont le bloc polyéther dérive du polyéthylène glycol. Il s'agit ici du Pebax® MV3000.

La polyoléfine fonctionnalisée est le Lotryl® 20 MA 08 qui est un copolymère d'éthylène avec de l'acrylate de n-methyle à une teneur pondérale d'acrylate de 20% et ayant un MFI de 8 g/10 min (190°C/2,16 kg).

L'amidon utilisé est de l'amidon modifié (TPS 3947) commercialisé par la Société Roquette.

Le Tableau 1 ci-dessous récapitule les compositions des différents mélanges préparés.

**Tableau 1**

| | | % en poids de copolyéther bloc amide PEBAX® MV 3000 | % en poids de polyoléfine fonctionnalisée | % en poids d'amidon |
|---|---|---|---|---|
| Exemples comparatifs | A | 100 | 0 | |
| | B | 70 | 30 | |
| | c | 50 | 50 | |
| | D | 30 | 70 | |
| Exemples selon l'invention | E | 50 | 0 | 50 |
| | F | 20 | 40 | 40 |

La Figure 1 représente la valeur de la perméabilité mesurée sur ces différents films. Les résultats obtenus avec les Exemples A à D montrent que la perméabilité d'un film comprenant un mélange d'un copolyéther bloc amide et d'une polyoléfine fonctionnalisée diminue lorsque le pourcentage de copolyéther bloc amide diminue.

En comparant l'exemple E avec l'exemple A, on constate que le remplacement de 50% du copolyéther bloc amide par de l'amidon permet de multiplier au moins par deux la perméabilité du film. D'autre part, en comparant l'exemple F avec l'exemple A, on constate qu'un film comprenant 40% d'amidon et 60% d'un mélange d'un copolyéther bloc amide et d'une polyoléfine fonctionnalisée présente une meilleure perméabilité qu'un film comprenant uniquement un copolyéther bloc amide.

Les films des exemples E et F selon l'invention présentent une perméabilité d'environ 1050 g/m² et 525 g/m², qui est nettement supérieure à la valeur de 350 g/m² recherchée. Les films selon l'invention peuvent donc être utilisés comme films imper respirants sous-toiture ou films d'isolation murale.
Aucune dégradation du film des exemples E et F n'a été observée malgré une exposition à l'humidité.

## Revendications

1. Film imper respirant comprenant :
a) un copolyéther bloc amide dans lequel le bloc polyéther dérive du polyéthylène glycol (PEG), éventuellement un copolyéther bloc ester, et optionnellement une polyoléfine fonctionnalisée;
b) de l'amidon,
dans lequel le pourcentage d'amidon représente de 10% à 80% du poids de la composition.

2. Film imper respirant selon la revendication 1, dans lequel le pourcentage d'amidon représente de 40 à 70 % du poids de la composition.

3. Film imper respirant selon l'une des revendications précédentes, dans lequel le copolyéther bloc amide comprend de 1 à 80 % en masse de blocs polyéther et de 20 à 99 % en masse de blocs polyamide, de préférence de 4 à 80 % en masse de blocs polyéther et 20 à 96 % en masse de blocs polyamide, de préférence encore de 30 à 60% en masse de blocs polyéther et de 40 à 70% en masse de blocs polyamide.

4. Film imper respirant selon la revendication 3, dans lequel le bloc polyamide est choisi dans le groupe comprenant les blocs 6, 11, 12, 6.6, 6.10 ou 6.12.

5. Film imper respirant selon l'une des revendications précédentes, dans lequel la polyoléfine fonctionnalisée comprend un greffage par un monomère choisi dans le groupe comprenant les acides carboxyliques insaturés, les anhydrides carboxyliques insaturés, les monomères vinyliques, les monomères acryliques, ou un mélange de ceux-ci.

6. Film imper respirant selon la revendication 5, dans lequel la polyoléfine fonctionnalisée est choisie dans le groupe comprenant les copolymères éthylène-ester acrylique, les copolymères éthylène-ester acrylique-anhydride maléique, les copolymères éthylène-ester acrylique-méthacrylate de glycidyle.

7. Film imper respirant selon l'une des revendications précédentes, dans lequel le film a une épaisseur comprise entre 25 et 500 µm, de préférence entre 50 et 400 µm.

8. Procédé de fabrication du film selon l'une des revendications précédentes, comprenant les étapes de :
a) mise à disposition d'un polymère choisi parmi un copolyéther bloc amide lequel le bloc polyéther dérive du polyéthylène glycol (PEG), éventuellement d'un copolyéther bloc ester et optionnellement d'une polyoléfine fonctionnalisée;
b) mise à disposition d'amidon ;
c) mélange et chauffage du ou des polymère(s) de l'étape a) et de l'amidon à une température supérieure à la température de fusion du ou des polymère(s) de l'étape a) et à la température de fusion de l'amidon ;
d) étirement du mélange pour former un film.

9. Procédé selon la revendication 8, dans lequel l'étape d'étirement du mélange est effectuée par extrusion soufflage.

10. Procédé selon la revendication 8, dans lequel l'étape d'étirement du mélange est effectuée par extrusion à plat.

11. Procédé selon l'une des revendications 9 à 10, dans lequel le chauffage de l'étape c) est effectué à une température inférieure à 200°C, de préférence inférieure à 190°C, de préférence encore inférieure à 180°C.

12. Utilisation d'un film imper respirant selon l'une des revendications 1 à 7, pour isoler les murs d'un bâtiment ou pour la mise en place d'un film sous-toiture.

13. Utilisation d'un film imper respirant selon l'une des revendications 1 à 7, dans l'équipement médical, les textiles, tels que des draps, des blouses chirurgicales, des tissus, des tapis, des matelas, des pansements, des vêtements, notamment des vêtements de protection ; dans l'agriculture, tels que les films agricoles ; dans l'emballage, le packaging ; l'équipement militaire, l'équipement maritime, notamment les couvertures marines ; le transport, l'aéronautique, l'automobile ; l'équipement d'extérieur ; le sport ; les loisirs ; l'informatique, l'électronique, l'ameublement ; la décoration ; l'équipement pour bébé ou pour enfant.

## Patentansprüche

1. Wasserdichte atmungsaktive Folie, umfassend:
a) ein Copolyethyer-block-amid, wobei sich der Polyetherblock von Polyethylenglykol (PEG) ableitet, eventuell einen Copolyether-block-ester und gegebenenfalls ein funktionalisiertes Polyolefin;
b) Stärke,
wobei der Prozentanteil an Stärke 10 bis 80 % des Gewichts der Zusammensetzung ausmacht.

2. Wasserdichte atmungsaktive Folie nach Anspruch 1, wobei der Prozentanteil an Stärke 40 bis 70 % des Gewichts der Zusammensetzung ausmacht.

3. Wasserdichte atmungsaktive Folie nach einem der vorhergehenden Ansprüche, wobei das Copolyethyer-block-amid 1 bis 80 Massen-% Polyetherblöcke und 20 bis 99 Massen-% Polyamidblöcke, vorzugsweise 4 bis 80 Massen-% Polyetherblöcke und 20 bis 96 Massen-% Polyamidblöcke und weiter bevorzugt 30 bis 60 Massen-% Polyetherblöcke und 40 bis 70 Massen-% Polyamidblöcke umfasst.

4. Wasserdichte atmungsaktive Folie nach Anspruch 3, wobei der Polyamidblock aus der Gruppe umfassend 6-, 11-, 12-, 6,6-, 6,10- oder 6,12-Blöcke ausgewählt ist.

5. Wasserdichte atmungsaktive Folie nach einem der vorhergehenden Ansprüche, wobei das funktionalisierte Polyolefin eine Pfropfung mit einem Monomer aus der Gruppe umfassend ungesättigte Carbonsäuren, ungesättigte Carbonsäureanhydriden, Vinylmonomere, Acrylmonomere oder eine Mischung davon umfasst.

6. Wasserdichte atmungsaktive Folie nach Anspruch 5, wobei das funktionierte Polyolefin aus der Gruppe umfassend Ethylen-Acrylsäureester-Copolymere, Ethylen-Acrylsäureester-Maleinsäureanhydrid-Copolymere und Ethylen-Acrylsäureester-Glycidylmethacrylat-Copolymere ausgewählt ist.

7. Wasserdichte atmungsaktive Folie nach einem der vorhergehenden Ansprüche, wobei die Folie eine Dicke zwischen 25 und 500 µm und vorzugsweise zwischen 50 und 400 µm aufweist.

8. Verfahren zur Herstellung einer Folie nach einem der vorhergehenden Ansprüche, das folgende Schritte umfasst:
a) Bereitstellen eines Polymers, das aus einem Copolyethyer-block-amid, wobei sich der Polyetherblock von Polyethylenglykol (PEG) ableitet, eventuell einem Copolyether-block-ester und gegebenenfalls einem funktionalisierten Polyolefin;
b) Bereitstellen von Stärke;
c) Mischen und Erhitzen des Polymers bzw. der Polymere aus Schritt a) und der Stärke auf eine Temperatur oberhalb des Schmelzpunkts des Polymers bzw. der Polymere aus Schritt a) und des Schmelzpunkts der Stärke;
d) Strecken der Mischung zur Bildung einer Folie.

9. Verfahren nach Anspruch 8, bei dem der Schritt des Streckens der Mischung durch Extrusionsblasformen durchgeführt wird.

10. Verfahren nach Anspruch 8, bei dem der Schritt des Streckens der Mischung durch Flachdüsenextrusion durchgeführt wird.

11. Verfahren nach einem der Ansprüche 9 bis 10, bei dem das Erhitzen von Schritt c) bei einer Temperatur unterhalb von 200 °C, vorzugsweise unterhalb von 190 °C und noch weiter bevorzugt unterhalb von 180 °C durchgeführt wird.

12. Verwendung einer wasserdichten atmungsaktiven Folie nach einem der Ansprüche 1 bis 7 zur Isolierung der Wände eines Gebäudes oder zur Installation einer Unterdachfolie.

13. Verwendung einer wasserdichten atmungsaktiven Folie nach einem der Ansprüche 1 bis 7 in medizinischer Ausrüstung und Textilien, wie Tüchern, Operationskitteln, textilen Flächengebilden, Teppichen, Matratzen, Verbänden, Kleidung, insbesondere Schutzkleidung; in der Landwirtschaft, wie Landwirtschaftsfolien; bei der Emballage, Verpackung; in Militärausrüstung, maritimer Ausrüstung, insbesondere Abdeckungen für das Seewesen; Transport, Luftfahrt, Fahrzeugen; Ausrüstung für den Außengebrauch; Sport; Freizeitgestaltung; Informatik, Elektronik, Möbeln; Dekoration; Ausrüstung für Babys oder Kinder.

## Claims

1. Waterproof-breathable film comprising:
a) a copolyether-block-amide in which the polyether block derives from polyethylene glycol (PEG), possibly a copolyether-block-ester, and optionally a functionalized polyolefin;
b) starch;
in which the percentage of starch represents from 10% to 80% of the weight of the composition.

2. Waterproof-breathable film according to Claim 1, in which the percentage of starch represents from 40 to 70% of the weight of the composition.

3. Waterproof-breathable film according to either of the preceding claims, in which the copolyether-block-amide comprises from 1 to 80% by weight of polyether blocks and from 20 to 99% by weight of polyamide blocks, preferably from 4 to 80% by weight of polyether blocks and from 20 to 96% by weight of polyamide blocks and more preferably from 30 to 60% by weight of polyether blocks and from 40 to 70% by weight of polyamide blocks.

4. Waterproof-breathable film according to Claim 3, in which the polyamide block is selected from the group comprising the 6, 11, 12, 6.6, 6.10 or 6.12 blocks.

5. Waterproof-breathable film according to one of the preceding claims, in which the functionalized polyolefin comprises a grafting by a monomer selected from the group comprising unsaturated carboxylic acids, unsaturated carboxylic acid anhydrides, vinyl monomers, acrylic monomers and a mixture thereof.

6. Waterproof-breathable film according to Claim 5, in which the functionalized polyolefin is selected from the group comprising ethylene/acrylic ester copolymers, ethylene/acrylic ester/maleic anhydride copolymers, ethylene/acrylic ester/glycidyl methacrylate copolymers.

7. Waterproof-breathable film according to one of the preceding claims, in which the film has a thickness of between 25 and 500 µm, preferably between 50 and 400 µm.

8. Process for the manufacture of the film according to one of the preceding claims, comprising the stages of:
a) providing a polymer selected from a copolyether-block-amide in which the polyether block derives from polyethylene glycol (PEG), possibly a copolyether-block-ester and optionally a functionalized polyolefin;
b) providing starch;
c) mixing and heating the polymer or polymers of stage a) and starch at a temperature greater than the melting point of the polymer or polymers of stage a) and than the melting point of starch;
d) drawing the mixture in order to form a film.

9. Process according to Claim 8, in which the stage of drawing the mixture is carried out by blow extrusion.

10. Process according to Claim 8, in which the stage of drawing the mixture is carried out by cast extrusion.

11. Process according to either of Claims 9 and 10, in which the heating of stage c) is carried out at a temperature lower than 200°C, preferably lower than 190°C and more preferably lower than 180°C.

12. Use of a waterproof-breathable film according to one of Claims 1 to 7 to insulate the walls of a building or for the installation of a roof-decking film.

13. Use of a waterproof-breathable film according to one of Claims 1 to 7 in medical equipment, textiles, such as sheets, surgical gowns, fabrics, carpets, mattresses, dressings, clothes, in particular protective clothing; in agriculture, such as agricultural films; in wrapping, packaging; military equipment, maritime equipment, in particular marine coverings; transportation, aeronautics, motor vehicles; exterior equipment; sport; leisure activities; computing, electronics, furniture; decoration; equipment for babies or for children.
